(19) Europäisches Patentamt
European Patent Office
Office européen des brevets

(11) EP 0 663 520 B1

(12) **EUROPEAN PATENT SPECIFICATION**

(45) Date of publication and mention
of the grant of the patent:
**14.04.1999 Bulletin 1999/15**

(51) Int Cl.6: **F02D 41/22**, F02D 1/02

(21) Application number: **95300068.4**

(22) Date of filing: **06.01.1995**

(54) **Method and system for validating the output of a sensor**

Verfahren und System zur Überprüfung eines Sensormesswerts auf Gültigkeit

Méthode et système pour valider la sortie d'un détecteur

(84) Designated Contracting States:
**DE ES FR GB IT**

(30) Priority: **07.01.1994 GB 9400227**

(43) Date of publication of application:
**19.07.1995 Bulletin 1995/29**

(73) Proprietor: **LUCAS INDUSTRIES public limited company**
**London W1Y 4DJ (GB)**

(72) Inventor: **Smith, Kenneth Leonard**
**Rainham, Kent ME8 9NQ (GB)**

(74) Representative: **Bibby, William Mark et al**
**Mathisen, Macara & co.**
**The Coach House**
**6-8 Swakeleys Road**
**Ickenham Uxbridge UB10 8BZ (GB)**

(56) References cited:
**FR-A- 2 524 552**       **JP-A-62 096 843**
**US-A- 5 190 012**

• **PATENT ABSTRACTS OF JAPAN vol. 7, no. 153 (M-226) 5 July 1983 & JP-A-58 062 342 (NISSAN JIDOSHA KK) 13 April 1983**

## Description

This invention relates to a method and system for validating the output of a sensor which is used to monitor an operating parameter of a vehicle engine.

With the advent of regulations controlling vehicle emissions, the operating conditions of a vehicle engine need to be carefully controlled.

One aspect of such control involves testing for failure of sensors which are used to monitor different operating parameters of the vehicle engine, in particular temperature sensors.

Hitherto, this has been achieved by detecting for an output outside the normal operating range of the sensor. However, as emission regulations become more exacting there has arisen a need to detect for in-range failures; that is, to detect for sensor outputs that are within the normal operating range of the sensor, but are nevertheless in error.

US-A-5,190,012 and JP-A-62,096,843 describe validation methods according to the precharacterizing part of claim 1 of the accompanying claims.

According to one aspect of the invention there is provided a method for validating the output of a sensor used to monitor an operating parameter of a vehicle engine, the method comprising the steps monitoring at least two other parameters, deriving from said at least two other parameters an expected value of the sensor output, comparing the expected value of the sensor output with the actual value of the sensor output, and generating an error signal in dependence on the comparison of the expected and actual values, characterized in that one of said other parameters is the integral over time of the volume of fuel supplied to the vehicle engine, said one other parameter representing a measure of heat supplied to the vehicle engine.

Typically, said error signal is generated if said expected and actual values differ by more than a predetermined amount.

The method may be used to validate the output of a sensor for sensing the temperature of engine coolant. Another of said other parameters may be ambient air temperature.

Said integral over time may be calculated from fuel pump speed and fuel pump rotor position.

According to another aspect of the invention there is provided a system for validating the output of a sensor used to monitor an operating parameter of a vehicle engine, the system comprising a processor having means for carrying out the method according to said one aspect of the invention.

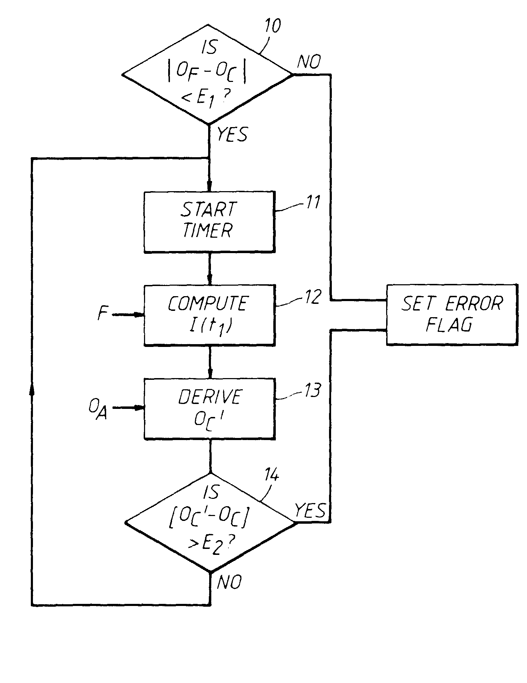

An implementation of the invention will now be described, by way of example only, with reference to the sole figure of the drawings which shows a flow diagram illustrating successive steps in the validation procedure.

In this implementation of the invention, the procedure is used to validate the output $O_C$ of a temperature sensor used to monitor the temperature of the engine coolant.

The procedure is carried out in the engine's electronic control unit (ECU) and, to this end, the ECU is continuously supplied with outputs from three temperature sensors; an output $O_A$ of a temperature sensor used to monitor air temperature, an output $O_F$ of a temperature sensor used to monitor the fuel temperature and the afore-mentioned output $O_C$.

In this implementation of the invention, the ECU also receives outputs F representing different operational parameters of the engine fuel pump. These operational parameters include pump speed and rotor position and enable the ECU to calculate the integral I(t) over time of the volume of fuel supplied to the engine, this integral being indicative of heat supplied to the engine.

Referring to the flow diagram, the ECU determines at step 10 if the modulus $|O_F\text{-}O_C| < E_1$, where $E_1$ is a predetermined error.

If it is determined that this condition is not satisfied the ECU sets an error flag which may cause a visual and/or audible warning to be generated. If, however, it is determined that the condition is satisfied, the ECU moves to step 11 starting a timer which, in turn, intiates computation of the integral I(t) over a preset time interval $t_1$ (step 12).

The values of the integral $I(t_1)$ and of output $O_A$ are then used at step 13 to derive an output $O_C'$ which the coolant temperature sensor is expected to produce.

In this particular implementation, the expected output $O_C'$ is derived from a look-up table stored in a memory in the ECU. The look-up table contains values of $O_C'$ as a function of integral $I(t_1)$, integral period $t_1$, and output $O_A$.

The expected output $O_C'$ derived from the look-up table is then compared at step 14 with the actual, measured output $O_C$. If the modulus $|O_C' - O_C| > E_2$, where $E_2$ is a second predetermined error, the sensor is determined to be operating abnormally, and in such circumstances, the ECU sets the error flag which may, if required initiate a second audible and/or visual warning signal. If, on the other hand, $|O_C' - O_C| \leq E_2$, the sensor is determined to be operating normally, no warning signal will be generated and the validation procedure is repeated.

In order to prevent spurious warning signals from being generated, a counter may be used to count the number of times the error flag is set. If this count exceeds a preset number within a given time interval, a warning signal will be produced. Alternatively, the warning signal may be produced in dependence on the drain current in a bucket-brigade device (BBD). In this case, the BBD is switched each time the error flag is set and the warning signal is generated provided the drain current exceeds a preset level for a continuous, preset interval of time.

It will be understood that although the above-described method is used to validate the output of the coolant temperature sensor, the invention can be used to validate the outputs of sensors monitoring other operating parameters of the vehicle engine.

The invention is advantageous in that it enables in-range, as well as out-of-range sensor failures to be detected. If required, a warning of a detected failure can be provided to the driver of the vehicle.

## Claims

1. A method for validating the output of a sensor used to monitor an operating parameter of a vehicle engine, the method comprising the steps of monitoring at least two other parameters, deriving from said at least two other parameters an expected value of the sensor output, comparing the expected value of the sensor output with the actual value of the sensor output, and generating an error signal in dependence on the comparison of the expected and actual values, characterized in that one of said other parameters is the integral over time of the volume of fuel supplied to the vehicle engine, said one other parameter representing a measure of heat supplied to the vehicle engine.

2. A method as claimed in claim 1 wherein the error signal is generated if said expected and actual values differ by more than a predetermined amount.

3. A method as claimed in claim 1 or claim 2, wherein the sensor output represents engine coolant temperature.

4. A method as claimed in any one of claims 1 to 3, wherein another of said other parameters is ambient air temperature.

5. A method as claimed in any one of claims 1 to 4, wherein said integral is calculated from fuel pump speed and fuel pump rotor position.

6. A method as claimed in claim 4 or claim 5 when dependent on claim 4, wherein said expected value of the sensor output is derived from the value of said integral, the time interval over which the integral is formed and the ambient air temperature by reference to a look-up table stored in a memory.

7. A method as claimed in any one of claims 1 to 6 including measuring the rate at which said error signals are generated, and providing a warning signal if the measured rate exceeds a preset value.

8. A system for validating the output of a sensor used to monitor an operating parameter of a vehicle engine, the system comprising a processor having means for carrying out the method according to any one of claims 1 to 7.

9. A system as claimed in claim 8, wherein the processor is contained in the engine's electronic control unit (ECU).

## Patentansprüche

1. Verfahren zur Überprüfung des Ausgangs eines Sensors auf seine Gültigkeit, der dazu verwendet wird, einen Betriebsparameter eines Fahrzeugmotors zu überwachen, wobei das Verfahren die Schritte eines Überwachens von mindestens zwei anderen Parametern, Ableiten aus den mindestens zwei anderen Parametern eines erwarteten Werts des Sensor-Ausgangs, Vergleichen des erwarteten Werts des Sensor-Ausgangs mit dem tatsächlichen Wert des Sensor-Ausgangs und Erzeugen eines Fehlersignals in Abhängigkeit von dem Vergleich des erwarteten und des tatsächlichen Werts aufweist, dadurch gekennzeichnet, daß einer der anderen Parameter das Integral über die Zeit des Volumens des Kraftstoffs ist, der zu dem Fahrzeugmotor zugeführt ist, wobei der andere Parameter eine Messung von Wärme darstellt, die zu dem Fahrzeugmotor zugeführt wird.

2. Verfahren nach Anspruch 1, wobei das Fehlersignal dann erzeugt wird, wenn sich der erwartete Wert und der tatsächliche Wert um mehr als einen vorbestimmten Betrag unterscheiden.

3. Verfahren nach Anspruch 1 oder Anspruch 2, wobei der Sensor-Ausgang eine Motorkühlmitteltemperatur darstellt.

4. Verfahren nach einem der Ansprüche 1 bis 3, wobei der andere Parameter eine Umgebungslufttemperatur ist.

5. Verfahren nach einem der Ansprüche 1 bis 4, wobei das Integral aus einer Kraftstoff-Pump-Geschwindigkeit und einer Kraftstoff-Pumpen-Rotorposition berechnet wird.

6. Verfahren nach Anspruch 4 oder Anspruch 5, in Abhängigkeit von Anspruch 4, wobei der erwartete Wert des Sensorausgangs von dem Wert des Integrals, dem Zeitintervall, über das das Integral gebildet wird, und der Umgebungslufttemperatur unter Bezugnahme auf eine Durchsichtstabelle, die in einem Speicher gespeichert ist, abgeleitet wird.

7. Verfahren nach einem der Ansprüche 1 bis 6, das eine Messung der Rate umfaßt, unter der die Fehlersignale erzeugt werden, und das ein Warnsignal liefert, falls die gemessene Rate einen vorgegebenen Wert übersteigt.

8. Verfahren zur Überprüfung der Gültigkeit des Ausgangs eines Sensors, der dazu verwendet wird, einen Betriebsparameter eines Fahrzeugmotors zu überwachen, wobei das System einen Prozessor aufweist, der Mittel zum Ausführen des Verfahrens gemäß einem der Ansprüche 1 bis 7 aufweist.

9. System nach Anspruch 8, wobei der Prozessor in der elektronischen Steuereinheit (ECU) des Motors enthalten ist.

## Revendications

1. Procédé de validation d'un signal de sortie d'un capteur utilisé pour contrôler un paramètre de fonctionnement du moteur d'un véhicule, procédé comportant les étapes consistant à contrôler au moins deux autres paramètres, extraire desdits au moins deux autres paramètres une valeur attendue du signal de sortie du signal de sortie du capteur, comparer la valeur attendue du signal de sortie du capteur à la valeur réelle du signal de sortie du capteur et générer un signal d'erreur en fonction de la comparaison des valeurs attendues et réelles, caractérisé en ce qu'un desdits autres paramètres est l'intégrale par rapport au temps du volume de carburant délivré au moteur du véhicule, ledit autre paramètre représentant une mesure de chaleur fournie au moteur du véhicule.

2. Procédé selon la revendication 1, dans lequel le signal d'erreur est généré si lesdites valeurs attendue et réelle diffèrent de plus d'une quantité prédéterminée.

3. Procédé selon la revendication 1 ou la revendication 2, dans lequel le signal de sortie du capteur représente la température de l'agent de refroidissement du moteur.

4. Procédé selon l'une quelconque des revendications 1 à 3, dans lequel un autre desdits autres paramètres est la température de l'air ambiant.

5. Procédé selon l'une quelconque des revendications 1 à 4, dans lequel ladite intégrale est calculée à partir de la vitesse et de la rotation du rotor de la pompe de carburant.

6. Procédé selon la revendication 4 ou la revendication 5 rattachée à la revendication 4, dans lequel ladite valeur attendue du signal de sortie du capteur est prélevée de la valeur de ladite intégrale, de l'intervalle de temps pendant lequel l'intégrale est formée et de la température de l'air ambiant en se référant à une table de consultation mémorisée dans une mémoire.

7. Procédé selon l'une quelconque des revendications 1 à 6, comprenant la mesure de la vitesse à laquelle lesdits signaux d'erreur sont générés, et la délivrance d'un signal d'alarme si la vitesse mesurée dépasse une valeur prédéterminée.

8. Système de validation du signal de sortie d'un capteur utilisé pour contrôler un paramètre de fonctionnement du moteur d'un véhicule, le système comportant un processeur possédant des moyens afin de mettre en oeuvre le procédé selon l'une quelconque des revendications 1 à 7.

9. Système selon la revendication 8, dans lequel le processeur est contenu dans l'unité de contrôle électronique du moteur (ECU).